(19) Europäisches Patentamt
European Patent Office
Office européen des brevets

(11) **EP 3 346 419 A1**

(12) **EUROPEAN PATENT APPLICATION**
published in accordance with Art. 153(4) EPC

(43) Date of publication:
**11.07.2018 Bulletin 2018/28**

(51) Int Cl.:
***G06K 9/62*** *(2006.01)*

(21) Application number: **16907682.5**

(22) Date of filing: **19.12.2016**

(86) International application number:
**PCT/CN2016/110747**

(87) International publication number:
**WO 2018/040387 (08.03.2018 Gazette 2018/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.08.2016 CN 201610767804**

(71) Applicant: **Soochow University**
**Suzhou, Jiangsu 215123 (CN)**

(72) Inventors:
• **ZHANG, Li**
**Suzhou,**
**Jiangshu 215123 (CN)**

• **LU, Xingning**
**Suzhou,**
**Jiangshu 215123 (CN)**
• **WANG, Bangjun**
**Suzhou,**
**Jiangshu 215123 (CN)**
• **LI, Fanzhang**
**Suzhou,**
**Jiangshu 215123 (CN)**
• **ZHANG, Zhao**
**Suzhou,**
**Jiangshu 215123 (CN)**

(74) Representative: **Tappe, Udo et al**
**Zacco Patent- und Rechtsanwalts GmbH**
**Am Wall 187-189**
**28195 Bremen (DE)**

(54) **FEATURE EXTRACTION AND CLASSIFICATION METHOD BASED ON SUPPORT VECTOR DATA DESCRIPTION AND SYSTEM THEREOF**

(57) A feature extraction and classification method based on support vector data description is provided, which includes: calculating, for each sample, Euclidean distances from the sample to spherical centers of multiple hypersphere models corresponding to different data categories, where the multiple hypersphere models are acquired in advance by training using a support vector data description algorithm(s101); substituting, for each sample, the Euclidean distances and radiuses of the hypersphere models respectively corresponding to the Euclidean distances into a new feature relation equation, to acquire a new feature sample corresponding to the sample, where the new feature samples constitute a new feature sample set(s102); and performing classification on the new feature sample set using a preset classification algorithm, to acquire a classification result(s103). With the method, a calculation amount in feature extraction can be reduced, and the speed of data classification can be increased. A feature extraction and classification system based on support vector data description having the above advantages is further provided.

Calculate, for each sample, Euclidean distances from the sample to spherical centers of multiple hypersphere models corresponding to different data categories, where the multiple hypersphere models are acquired in advance by training using a support vector data description algorithm — s101

Substitute, for each sample, the Euclidean distances and radiuses of the hypersphere models respectively corresponding to the Euclidean distances into a new feature relation equation, to acquire a new feature sample corresponding to the sample, where the new feature samples constitute a new feature sample set — s102

Perform classification on the new feature sample set using a preset classification algorithm, to acquire a classification result — s103

**Figure 1**

## Description

This application claims the priority to Chinese Patent Application No. 201610767804.3, titled "FEATURE EXTRACTION AND CLASSIFICATION METHOD BASED ON SUPPORT VECTOR DATA DESCRIPTION AND SYSTEM
THEREOF", filed on August 30th, 2016 with the State Intellectual Property Office of People's Republic of China, which
is incorporated herein by reference in its entirety.

## FIELD

The present disclosure relates to the technical field of feature extraction, and in particular to a feature extraction
and classification method based on support vector data description and a system thereof.

## BACKGROUND

Feature extraction is a common dimension reduction method, and is mainly used to process a task including
a large number of objects. A sample involved in this task generally includes a large amount of data with certain features,
where the data may be binary data, discrete multivalued data, or continuous data. During data processing, accurate
determination and decision can be obtained by using all information of all the data. However, in practical operation, raw
information of the data generally includes relevance, noises, and even redundant variables or attributes. Therefore, if
data is used without being processed, significant cost is involved, where the cost may relates to memory capacities,
time complexity and decision accuracy. In order to improve data storage and calculation performances, a feature extraction method is required to find compact sample information from raw data.
The feature extraction is a method where critical associated information is captured from the inputted raw data
to construct a new feature subset. In the feature extraction method, each new feature is a function mapping of all original
features. At present, a feature extraction method based on support vector machine (SVM) is mainly used. SVM is a
binary classification method based on construction of a hyperplane, where classification of various types of data is
constructed in a one-to-one mode or a one-to-many mode, and a new feature is constructed by calculating a distance
from a sample to the hyperplane. Although different types of data information are fully considered in this method, the
computational complexity is significant in a case of a great data amount, especially in the one-to-many mode.
Therefore, the issue currently to be solved by those skilled in the art is to provide a feature extraction and
classification method based on support vector data description and a system thereof having a small calculation amount.

## SUMMARY

An object of the present disclosure is to provide a feature extraction and classification method based on support
vector data description and a system thereof, with which the calculation amount in feature extraction can be reduced,
and the speed of data classification can be increased.
In order to address the above technical issue, a feature extraction and classification method based on support
vector data description is provided according to the present disclosure, which includes:

calculating, for each sample, Euclidean distances from the sample to spherical centers of multiple hypersphere
models corresponding to different data categories, where the multiple hypersphere models are acquired in advance
by training using a support vector data description algorithm;

substituting, for each sample, the Euclidean distances and radiuses of the hypersphere models respectively corresponding to the Euclidean distances into a new feature relation equation, to acquire a new feature sample corresponding to the sample, where the new feature samples constitute a new feature sample set; and

performing classification on the new feature sample set using a preset classification algorithm, to acquire a classification result.

Preferably, the multiple hypersphere models may be acquired by:

dividing pre-acquired original training samples into $J$ training subsets $X_j=\{(\mathbf{x}_i,y_i)|\mathbf{x}_i\in R^m,y_i=j,i=1,...,n_j\}$ based on data
categories, where $j$ represents a data category, $j = 1,..., J$ ; $R^m$ represents a set of real numbers, of which a dimension
is m; $n$ represents the total number of samples in the training subsets; and $n_j$ represents the number of samples in a *j*-th training subset, $n = \sum_{j=1}^{J} n_j$; and

training the *J* training subsets using the support vector data description algorithm, to acquire *J* hypersphere models, respectively.

Preferably, the new feature relation equation may be expressed as:

$$\mathbf{x}_i^{FE} = \left[ \frac{d(\mathbf{x}_i, \mathbf{a}_1)}{R_1}, \frac{d(\mathbf{x}_i, \mathbf{a}_2)}{R_2}, ..., \frac{d(\mathbf{x}_i, \mathbf{a}_J)}{R_J} \right]^T,$$

where the new feature sample is $\mathbf{x}_i^{FE}$, $\mathbf{x}_i^{FE} \in R^J, i = 1, ..., n$; $R_j$ represents a radius of the hypersphere model corresponding to the *j*-th training subset; and $\mathbf{a}_j$ represents a spherical center of the hypersphere model corresponding to the *j*-th training subset.

Preferably, the preset classification algorithm may include a neural network classification algorithm or a support vector machine classification algorithm.

In order to address the above technical issue, a feature extraction and classification system based on support vector data description is further provided according to the present disclosure, which includes:

a distance calculation unit configured to calculate, for each sample, Euclidean distances from the sample to spherical centers of multiple hypersphere models corresponding to different data categories, where the multiple hypersphere models are acquired in advance by training using a support vector data description algorithm;

a new feature generation unit configured to substitute, for each sample, the Euclidean distances and radiuses of the hypersphere models respectively corresponding to the Euclidean distances into a new feature relation equation, to acquire a new feature sample corresponding to the sample, where the new feature samples constitute a new feature sample set; and

a classification unit configured to perform classification on the new feature sample set using a preset classification algorithm, to acquire a classification result.

Preferably, the classification unit may be a neural network classifier or a support vector machine classifier.

With the feature extraction and classification method based on support vector data description according to the present disclosure, the Euclidean distances from the sample to the spherical centers of the multiple preset hypersphere models are calculated, a new feature sample corresponding to the sample is calculated based on the Euclidean distances and the spherical centers of hypersphere models respectively corresponding to the Euclidean distances, thereby acquiring the new feature sample set, and classification is performed on the new feature sample set. According to the present disclosure, feature extraction is performed by using the hypersphere model in the support vector data description algorithm, and the extracted new feature samples are classified. As compared with the SVM algorithm, the calculation amount is reduced, and the speed of data classification is increased. The feature extraction and classification system based on support vector data description is further provided according to the present disclosure, which also has the above effects and is not described in detail here.

**BRIEF DESCRIPTION OF THE DRAWINGS**

The drawings to be used in the description of the embodiments of the application or the conventional technology will be described briefly as follows, so that the technical solutions according to the embodiments of the present application or according to the conventional technology will become clearer. It is apparent that the drawings in the following description only illustrate some embodiments of the present application. For those skilled in the art, other drawings may be obtained according to these drawings without any creative work.

Figure 1 is a flowchart illustrating a procedure of a feature extraction and classification method based on support vector data description according to the present disclosure; and

Figure 2 is a schematic structural diagram of a feature extraction and classification system based on support vector data description according to the present disclosure.

**DETAILED DESCRIPTION OF THE EMBODIMENTS**

The core of the present disclosure is to provide a feature extraction and classification method based on support vector data description and a system thereof, with which a calculation amount in feature extraction can be reduced, and the speed of data classification can be increased.

In order to make the object, technical solutions and advantages of the present disclosure clearer, technical solutions according to embodiments of the present disclosure are described clearly and completely hereinafter in conjunction with drawings used in the embodiments of the present disclosure. Apparently, the described embodiments are only some rather than all of the embodiments of the present disclosure. Any other embodiments obtained by those skilled in the art based on the embodiments of the present disclosure without any creative work fall in the scope of protection of the present disclosure.

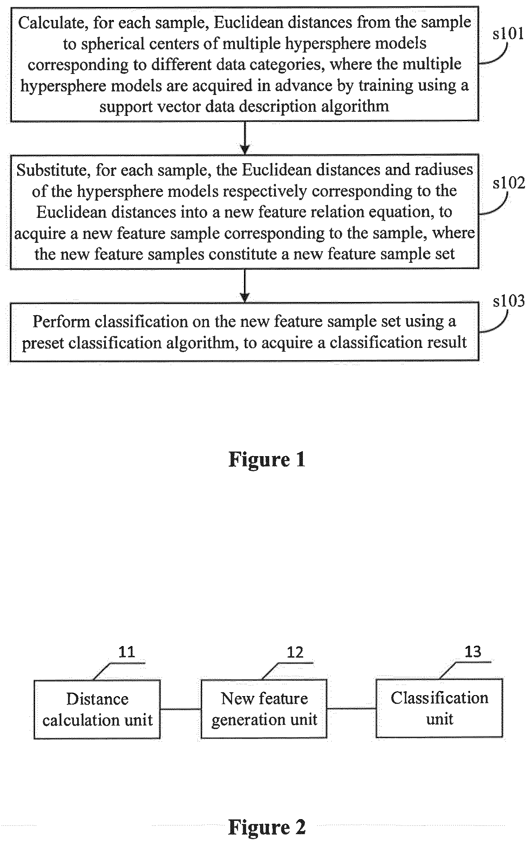

A feature extraction and classification method based on support vector data description is provided according to the present disclosure. As shown in Figure 1, which is a flowchart illustrating a procedure of a feature extraction and classification method based on support vector data description according to the present disclosure, the method includes the following step s101 to step s103.

In step s101, for each sample, Euclidean distances from the sample to spherical centers of multiple hypersphere models corresponding to different data categories are calculated. The multiple hypersphere models are acquired in advance by training using a support vector data description algorithm.

In step s102, for each sample, the Euclidean distances and radiuses of hypersphere models respectively corresponding to the Euclidean distances are substituted into a new feature relation equation, to acquire a new feature sample corresponding to the sample. The new feature samples constitute a new feature sample set.

In step s103, classification is performed on the new feature sample set using a preset classification algorithm, to acquire a classification result.

The preset classification algorithm includes:

a neural network classification algorithm or a support vector machine classification algorithm. Of course, other classification algorithms may also be used, which is not limited in the present disclosure.

Preferably, the multiple hypersphere models are acquired by the following steps.

Pre-acquired original training samples are divided into $J$ training subsets $X_j=\{(\mathbf{x}_i,y_i)|\mathbf{x}_i\in R^m,y_i=j,i=1,...,n_j\}$ based on data categories, where $j$ represents a data category, $j = 1,...,J$; $R^m$ represents a set of real numbers, of which a dimension is m; $n$ represents the total number of samples in the training subsets; and $n_j$ represents the number of samples in a $j$-th training subset, $n = \sum_{j=1}^{J} n_j$.

The $J$ training subsets are trained using the support vector data description algorithm, to acquire $J$ hypersphere models, respectively.

The new feature relation equation is expressed as:

$$\mathbf{x}_i^{FE} = \left[ \frac{d(\mathbf{x}_i,\mathbf{a}_1)}{R_1}, \frac{d(\mathbf{x}_i,\mathbf{a}_2)}{R_2}, ..., \frac{d(\mathbf{x}_i,\mathbf{a}_J)}{R_J} \right]^T.$$

In the above equation, the new feature sample is $\mathbf{x}_i^{FE}$, $\mathbf{x}_i^{FE} \in R^J, i=1,...,n$; $R_j$ represents a radius of the hypersphere model corresponding to the $j$-th training subset; and $\mathbf{a}_j$ represents a spherical center of the hypersphere model corresponding to the $j$-th training subset.

The number of the hypersphere models used for calculating the new feature sample set is determined based on the actual number of the data categories. The number of categories and content of the training subsets are not limited in the present disclosure.

It should be understood that a data dimension of the original training samples is $m$. That is, a dimension of the origional training samples is $m$ in a case where the new feature sample of the sample is calculated using the hypersphere models. As can be seen from the above new relation equation, a dimension of the new feature samples is $J$, and the number *J* of the categories is generally less than *m*. Therefore, the data dimension can be reduced with the feature extraction method based on support vector data description according to the present disclosure.

For further understanding of the beneficial effects of the present disclosure, reference is made to the following Table 1 to Table 3. Table 1 shows description of an Isolet dataset in a specific embodiment, Table 2 shows a result of comparison between classification effects of the present disclosure and the SVM algorithm, and Table 3 shows a result of comparison between operation durations of the present disclosure and the SVM algorithm.

Table 1 Description of an Isolet dataset in a specific embodiment

| Dataset | Categories | Number of features | Total number of samples | Number of training samples | Number of tested samples |
|---------|-----------|--------------------|-------------------------|----------------------------|--------------------------|
| Isolet | 26 | 617 | 7797 | 6238 | 1559 |

| Classifier — Algorithm | Neural network | Support vector machine |
|------------------------|----------------|------------------------|
| The present disclosure | 93.59 | 90.64 |
| Feature extraction based on SVM (one-to-one) | 92.23 | 86.72 |
| Feature extraction based on SVM (one-to-multiple) | 92.25 | 90.07 |

Table 2 Result of Comparison between classification effects of the present disclosure and the SVM algorithm (%)

Table 3 Result of comparison between operation durations of the present disclosure and the SVM algorithm

| | The present disclosure | Feature extraction based on SVM (one-to-one) | Feature extraction based on SVM (one-to-many) |
|--|------------------------|----------------------------------------------|-----------------------------------------------|
| Duration (seconds) | 204 | 3412 | 1239 |

With the feature extraction and classification method based on support vector data description according to the present disclosure, the Euclidean distances from the sample to the spherical centers of the multiple preset hypersphere models are calculated, a new feature sample corresponding to the sample is calculated based on the Euclidean distances and the spherical centers of hypersphere models respectively corresponding to the Euclidean distances, thereby acquiring the new feature sample set, and classification is performed on the new feature sample set. According to the present disclosure, feature extraction is performed by using the hypersphere model in the support vector data description algorithm, and the extracted new feature samples are classified. As compared with the SVM algorithm, the calculation amount is reduced, the classification effect is improved, the operation duration is reduced, and the speed of data classification is increased.

A feature extraction and classification system based on support vector data description is further provided according to the present disclosure. As shown in Figure 2, which is a schematic structural diagram of a feature extraction and classification system based on support vector data description according to the present disclosure, the system includes a distance calculation unit 11, a new feature generation unit 12, and a classification unit 13.

The distance calculation unit 11 is configured to calculate, for each sample, Euclidean distances from the sample to spherical centers of multiple hypersphere models corresponding to different data categories. The multiple hypersphere models are acquired in advance by training using a support vector data description algorithm.

The new feature generation unit 12 is configured to substitute, for each sample, the Euclidean distances and radiuses of the hypersphere models respectively corresponding to the Euclidean distances into a new feature relation equation, to acquire a new feature sample corresponding to the sample. The new feature samples constitute a new feature sample set.

The classification unit 13 is configured to perform classification on the new feature sample set using a preset classification algorithm, to acquire a classification result.

Specifically, the classification unit 13 is:

a neural network classifier or a support vector machine classifier. Of course, the present disclosure is not limited thereto.

With the feature extraction and classification system based on support vector data description according to the present disclosure, the Euclidean distances from the sample to the spherical centers of the multiple preset hypersphere models are calculated, a new feature sample corresponding to the sample is calculated based on the Euclidean distances and the spherical centers of hypersphere models respectively corresponding to the Euclidean distances, thereby acquiring the new feature sample set, and classification is performed on the new feature sample set. According to the present disclosure, feature extraction is performed by using the hypersphere model in the support vector data description algorithm, and the extracted new feature samples are classified. As compared with the SVM algorithm, the calculation amount is reduced, the classification effect is improved, the operation duration is reduced, and the speed of data classification is increased.

It should be noted that, the terms "include", "comprise" or any variants thereof in the embodiments of the disclosure are intended to encompass nonexclusive inclusion so that a process, method, article or apparatus including a series of elements includes both those elements and other elements which are not listed explicitly or an element(s) inherent to the process, method, article or apparatus. Without much more limitation, an element being defined by a sentence "include/comprise a(n)......" will not exclude presence of an additional identical element(s) in the process, method, article or apparatus including the element.

The above illustration of the disclosed embodiments enables those skilled in the art to implement or practice the present disclosure. Many changes to these embodiments are apparent for those skilled in the art, and general principles defined herein can be implemented in other embodiments without departing from the spirit or scope of the present disclosure. Hence, the present disclosure is not limited to the embodiments disclosed herein, but is to conform to the widest scope consistent with principles and novel features disclosed herein.

## Claims

1. A feature extraction and classification method based on support vector data description, comprising:

   calculating, for each sample, Euclidean distances from the sample to spherical centers of a plurality of hypersphere models corresponding to different data categories, wherein the plurality of hypersphere models are acquired in advance by training using a support vector data description algorithm;
   substituting, for each sample, the Euclidean distances and radiuses of the hypersphere models respectively corresponding to the Euclidean distances into a new feature relation equation, to acquire a new feature sample corresponding to the sample, wherein the new feature samples constitute a new feature sample set; and
   performing classification on the new feature sample set using a preset classification algorithm, to acquire a classification result.

2. The method according to claim 1, wherein the plurality of hypersphere models are acquired by:

   dividing pre-acquired original training samples into $J$ training subsets $X_j=\{(\mathbf{x}_i,y_i)|\mathbf{x}_i \in R^m, y_i=j, i=1,...,n_j\}$ based on data categories, wherein $j$ represents a data category, $j = 1,..., J$; $R^m$ represents a set of real numbers, of which a dimension is m; $n$ represents the total number of samples in the training subsets; and $n_j$ represents the number of samples in a $j$-th training subset, $n = \sum_{j=1}^{J} n_j$; and

   training the $J$ training subsets using the support vector data description algorithm, to acquire $J$ hypersphere models, respectively.

3. The method according to claim 2, wherein the new feature relation equation is expressed as:

$$\mathbf{x}_i^{FE} = \left[ \frac{d(\mathbf{x}_i, \mathbf{a}_1)}{R_1}, \frac{d(\mathbf{x}_i, \mathbf{a}_2)}{R_2}, \cdots, \frac{d(\mathbf{x}_i, \mathbf{a}_J)}{R_J} \right]^T,$$

wherein the new feature sample is $\mathbf{x}_i^{FE}$, $\mathbf{x}_i^{FE} \in R^J$, $i = 1, \ldots, n$; $R_j$ represents a radius of the hypersphere model corresponding to the $j$-th training subset; and $\mathbf{a}_j$ represents a spherical center of the hypersphere model corresponding to the $j$-th training subset.

4. The method according to claim 3, wherein the preset classification algorithm comprises a neural network classification algorithm or a support vector machine classification algorithm.

5. A feature extraction and classification system based on support vector data description, comprising:

a distance calculation unit configured to calculate, for each sample, Euclidean distances from the sample to spherical centers of a plurality of hypersphere models corresponding to different data categories, wherein the plurality of hypersphere models are acquired in advance by training using a support vector data description algorithm;

a new feature generation unit configured to substitute, for each sample, the Euclidean distances and radiuses of the hypersphere models respectively corresponding to the Euclidean distances into a new feature relation equation, to acquire a new feature sample corresponding to the sample, wherein the new feature samples constitute a new feature sample set; and

a classification unit configured to perform classification on the new feature sample set using a preset classification algorithm, to acquire a classification result.

6. The system according to claim 5, wherein the classification unit is a neural network classifier or a support vector machine classifier.

| Calculate, for each sample, Euclidean distances from the sample to spherical centers of multiple hypersphere models corresponding to different data categories, where the multiple hypersphere models are acquired in advance by training using a support vector data description algorithm | s101 |

| Substitute, for each sample, the Euclidean distances and radiuses of the hypersphere models respectively corresponding to the Euclidean distances into a new feature relation equation, to acquire a new feature sample corresponding to the sample, where the new feature samples constitute a new feature sample set | s102 |

| Perform classification on the new feature sample set using a preset classification algorithm, to acquire a classification result | s103 |

**Figure 1**

| 11 | 12 | 13 |
|---|---|---|
| Distance calculation unit | New feature generation unit | Classification unit |

**Figure 2**

## INTERNATIONAL SEARCH REPORT

| International application No. |
| --- |
| PCT/CN2016/110747 |

**A. CLASSIFICATION OF SUBJECT MATTER**

G06K 9/62 (2006.01) i

According to International Patent Classification (IPC) or to both national classification and IPC

**B. FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, WPI, EPODOC, CNKI: 特征, 提取, 超球, 超核, 欧氏距离, 分类, character+, extract+, hyper-sphere, distance, Euclidean, class+

**C. DOCUMENTS CONSIDERED TO BE RELEVANT**

| Category* | Citation of document, with indication, where appropriate, of the relevant passages | Relevant to claim No. |
| --- | --- | --- |
| X | 秦玉萍等. 基于超球支持向量机的兼类文本分类算法研究. 计算机工程与应用. 01 July 2008 (01.07.2008), 44(19), pp. 166 and 167. (Computer Engineering and Applications), non-official translation (QIN, Yuping et al. Research on the Text Categorization Algorithm Based on Hypersphere Support Vector Machines) | 1-6 |
| A | CN 104361342 A (TONGJI UNIVERSITY) 18 February 2015 (18.02.2015), entire document | 1-6 |
| A | CN 104750875 A (SOOCHOW UNIVERSITY) 01 July 2015 (01.07.2015), entire document | 1-6 |
| A | US 2014376804 A1 (XEROX CORP.) 25 December 2014 (25.12.2014), entire document | 1-6 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 04 May 2017 | 06 June 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer HU, Lili Telephone No. (86-10) 52745004 |
| --- | --- |

Form PCT/ISA /210 (second sheet) (July 2009)

## INTERNATIONAL SEARCH REPORT
### Information on patent family members

International application No.

PCT/CN2016/110747

| Patent Documents referred in the Report | Publication Date | Patent Family | Publication Date |
|---|---|---|---|
| CN 104361342 A | 18 February 2015 | None | |
| CN 104750875 A | 01 July 2015 | None | |
| US 2014376804 A1 | 25 December 2014 | None | |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610767804